# EUROPEAN PATENT APPLICATION

(11) **EP 1 995 838 A2**
(43) Date of publication of application: **26.11.2008**
(21) Application number: 08156554.1
(22) Date of filing: 20.05.2008
(51) Int. Cl.: H02G 3/14

(54) **Supporting Device for Socket**

(30) Priority: 21.05.2007 TW 96118041
(71) Applicant: Liao, Sheng-Hsin, Taipei, Hsien (TW)
(72) Inventor: Liao, Sheng-Hsin, Taipei, Hsien (TW)
(74) Representative: Viering, Jentschura & Partner

(57) **Abstract**

A supporting device for a socket is disposed around a socket for supporting an electronic apparatus and a transmission line thereof. When a plug of the transmission line of the electronic apparatus is inserted into the socket to perform the charging or Internet data transmission operation of the electronic apparatus, the supporting device can be used to support the electronic apparatus, thereby avoiding the transmission line and the plug being pulled away due to the fact that the distance between the electronic apparatus and the socket is large and thus a long transmission line is needed. Therefore, the electrical connection between the plug and the socket can be maintained without interrupting the charging or Internet transmission operation of the electronic apparatus. Furthermore, the electronic apparatus can be protected from being dragged and suffer damage. Further, the supporting device is provided with notches for hanging a free plug, so that the plug will not be placed randomly or get lost.

## Description

### BACKGROUND OF THE INVENTION

### 1. Field of the Invention

The present invention relates to a supporting device for a socket, and in particular to a supporting device for supporting an electronic apparatus, whereby the problem that a plug may be pulled away from a socket and interrupt the charging or Internet data transmission operation of the electronic apparatus can be avoided. Therefore, the present invention can protect the electronic apparatus and maintain the charging and practical operations of the electronic apparatus.

### 2. Description of Related Art

Electronic apparatuses (such as a mobile phone, a digital camera, a PDA and other portable electronic apparatuses) need to be recharged with electricity on a regular basis, in order to maintain their normal operation. Therefore, public power grid is often used as a power source.

The electric power transmission lines of public power grid are embedded in walls within a building. Via sockets provided on the wall surface, the electric power transmission lines of public power grid or signal lines of telecommunication (i.e. DSL wires or phone lines) can be connected to various electronic apparatuses. When an electronic apparatus lacks power and needs to be recharged, or if it needs to transmit information by means of connecting to the Internet, a power plug or a signal transmission cable of the electronic apparatus can be inserted into the appropriate socket, so that the electronic apparatus can respectively obtain power or access the Internet.

However, in practice, the above-mentioned conventional socket has drawbacks as follows.
(I) In order to be carried about easily by a user and increase mobility and convenience thereof, modern electronic apparatuses tend to be designed to be miniaturized in volume and light in weight. When the electronic apparatus lacks power and needs to recharge, or if it needs to transmit information by means of connecting to the Internet, the electronic apparatus which might be expensive is often carelessly placed on the ground near the socket because there is no supporting device for the electronic apparatus near the socket. During this time, while the electronic apparatus is inserted into the socket, if someone passes through the ground near the socket (i.e. near the electronic apparatus), that someone may step on or kick the electronic apparatus accidentally, or trip over the wires responsible for connecting the electronic apparatus to the socket, thus causing damage to the electronic apparatus
(II) Although a user may attempt to place the electronic apparatus on a higher elevation away from the socket (such as on a bedside cupboard, table, chair or the like) in order to reduce the probability that the electronic apparatus may be stepped on or kicked accidentally thus suffer damage, but in this case an extended distance will exists between the electronic apparatus and the socket, and it is necessary to have extended wires with plugs for the socket, which increases the probability of a mishap. Since the distance between the electronic apparatus the socket is long in this case, the wires with plug are likely to be pulled away by an external force, either accidentally because the user didn't realize the electronic apparatus is plugged in, or because the user is too lazy to bend down and detach the plug properly and chose to simply pull from the wire for unplug, but either action will adversely affect the electrical connection between the plug and the socket, and also the structural integrity of the wire and the plug.

Consequently, because of the above hazards resulting from technical design limitations, the inventor strives via real world experience and academic research to develop the present invention, which can effectively improve the limitations described above.

### SUMMARY OF THE INVENTION

The object of the present invention is to provide a supporting device for a socket, which is disposed around the socket for supporting an electronic apparatus that is undergoing recharge or transmitting/receiving Internet signals via the socket, thereby protecting the electronic apparatus and maintaining the recharge and Internet transmission of the electronic apparatus. Furthermore, the present invention can accommodate the plug by providing a physical structure for an unplugged plug to be put away, so that the plug will not be dropped randomly or get lost.

In order to achieve the above objects, the present invention provides a supporting device for a socket which is disposed around a socket. The supporting device comprises a panel having an engaging portion that fits securely around the socket; and a supporting plate located in front of the panel, one side of the supporting plate coupled to the panel via at least one pivot connector, and the supporting plate being provided thereon with at least one notch.

The present invention has advantageous features as follows. The supporting plate is used to support the electronic apparatus, thereby keeping a shorter distance between the electronic apparatus and the socket, protecting the electronic apparatus and maintaining the charging and Internet transmission operations thereof. Furthermore, the free plug can be hung on the notch or the wire of the plug can be wrapped around the supporting plate securely by securing the wire against the notch, so that the plug will not be placed randomly or get lost.

In order to further understand the characteristics and technical contents of the present invention, a detailed description relating thereto will be made with reference to the accompanying drawings. However, the drawings are illustrative only, but not used to limit the scope of the present invention.

### BRIEF DESCRIPTION OF THE DRAWINGS

Fig. 1 is a perspective view showing a first embodiment of the present invention;
Fig. 2 is a side view showing the first embodiment of the present invention;
Fig. 3 is a side view showing an electronic apparatus being supported on the first embodiment of the present invention;
Fig. 4 is a perspective view showing another position of the supporting plate of the first embodiment of the present invention;
Fig. 5 is a cross-sectional view showing a second embodiment of the present invention;
Fig. 6 is a cross-sectional view showing an electronic apparatus being supported on the second embodiment of the present invention;
Fig. 7 is a perspective view showing the second embodiment of the present invention;
Fig. 8 is a cross-sectional view showing an electronic apparatus being supported on a third embodiment of the present invention;
Fig. 9 is a perspective view showing a fourth embodiment of the present invention;
Fig. 10 is a perspective view showing a fifth embodiment of the present invention;
Fig. 11 is a perspective view showing a sixth embodiment of the present invention;
Fig. 12 is a side view showing a seventh embodiment of the present invention;
Fig. 13 is a perspective view showing an operating state of the seventh embodiment of the present invention; and
Fig. 14 is a cross-sectional view showing an eighth embodiment of the present invention.

### DETAILED DESCRIPTION OF THE PREFERRED EMBODIMENTS

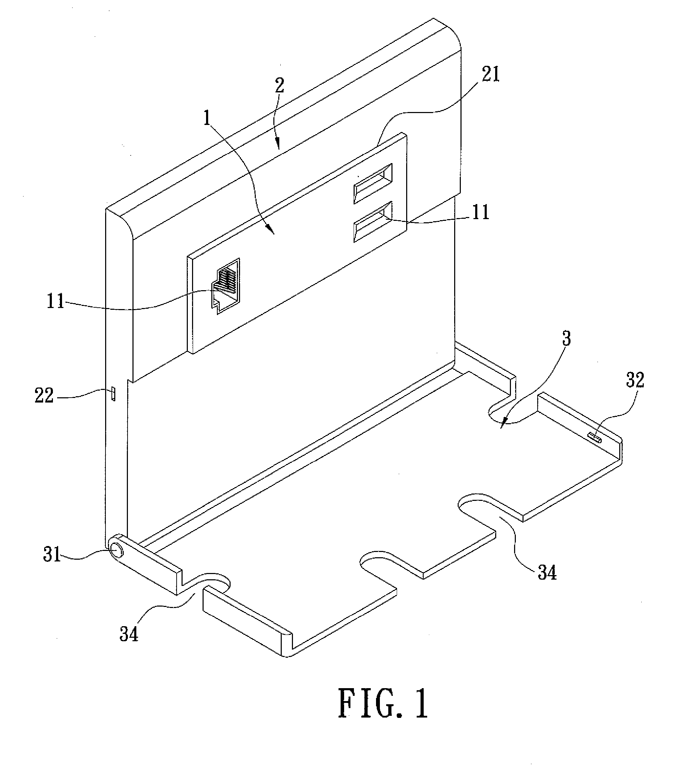

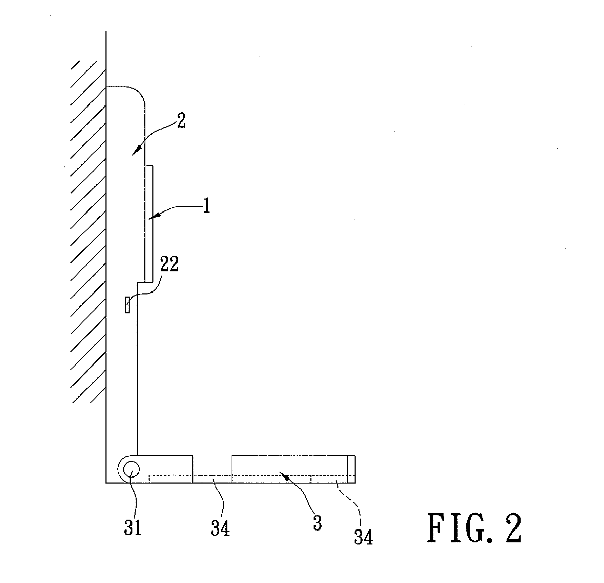

Please refer to Figs. 1 and 2. The supporting device of the present invention is disposed around a socket 1. The surface of the socket 1 is provided with two sets of insertion holes 11. The insertion holes 11 are used for a power supply line, a network line, or a telephone line. The supporting device comprises a panel 2 and a supporting plate 3. The panel 2 has an engaging portion 21 that fits securely around the socket 1. Both sides of the panel 2 are provided with a slot 22 respectively. In the present embodiment, the engaging portion 21 is a through hole.

The supporting plate 3 is located in front of the panel 2. Both ends of the bottom side of the supporting plate 3 are pivoted to the bottom side of the panel 2 via a pivot connector such as a hinge 31. Both side edges of the supporting plate 3 are provided with a fastener 32 for buckling in the slot 22 respectively, so that the supporting plate 3 can be fastened to the panel 2. The supporting plate 3 is provided with at least one notch 34. The notch 34 extends to the edge of the supporting plate 3 to form an opening. In the first embodiment, there is a plurality of notches 34 and these notches 34 are provided at the top side and both side edges of the supporting plate 3.

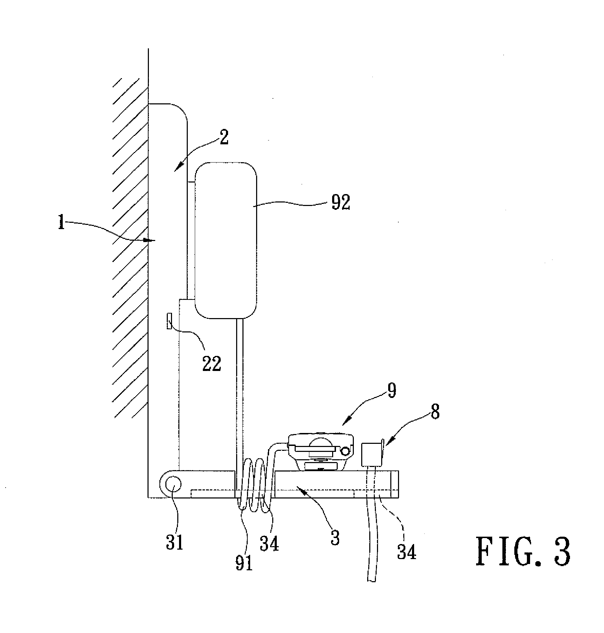

Please refer to Fig. 1 to 3. According to the first embodiment of the present invention, when the user intends to connect an electronic apparatus 9 (such as a mobile phone) to the socket 1 electrically, the user can release the buckling of the supporting plate 3 and the panel 2 and then rotate the supporting plate 3 with respect to the panel 2, thereby unfolding the supporting plate 3 and making it oriented horizontally (so that panel 2 and supporting plate 3 forms a L shape). Thereafter, the user wraps a transmission line 91 of the electronic apparatus 9 in the notches 34 on both sides of the supporting plate 3 with a plug 92 provided at the end of the transmission line 91, wherein the plug 92 will be inserted in the insertion hole 11 of the socket 1. Then, the user puts the electronic apparatus 9 on the supporting plate 3, so that the electronic apparatus 9 can be kept stable during the charging and Internet transmission operation of the electronic apparatus 9 via the socket 1. Furthermore, a free plug 8 can be hung on the notch 34, so that the plug 8 will not be placed randomly or get lost.

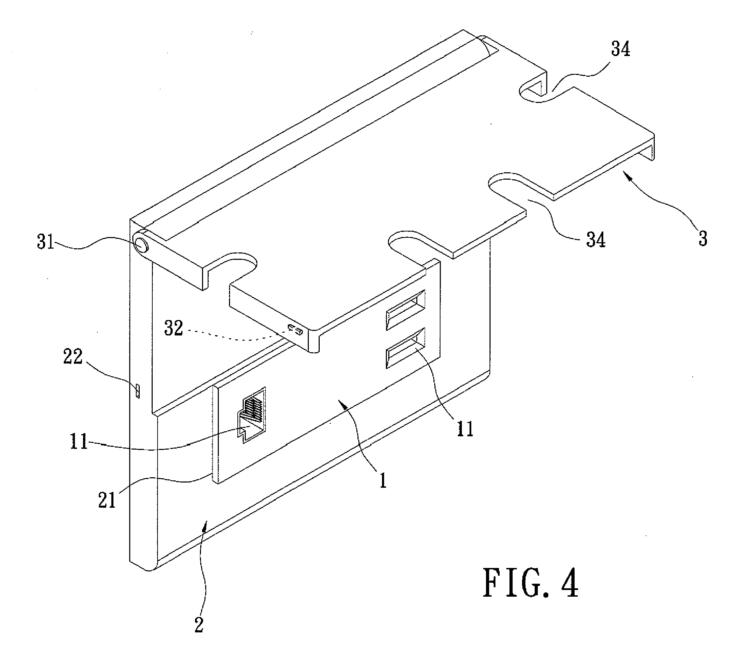

As shown in Fig. 4, in a minor variation of the first embodiment, both ends of the top side of the supporting plate 3 are pivoted to the top side of the panel 2 via a pivot connector such as a hinge 31, so that the supporting plate 3 can rotate upwardly to a horizontal position with respect to the panel 2 (so that panel 2 and supporting plate 3 forms an up side down L shape).

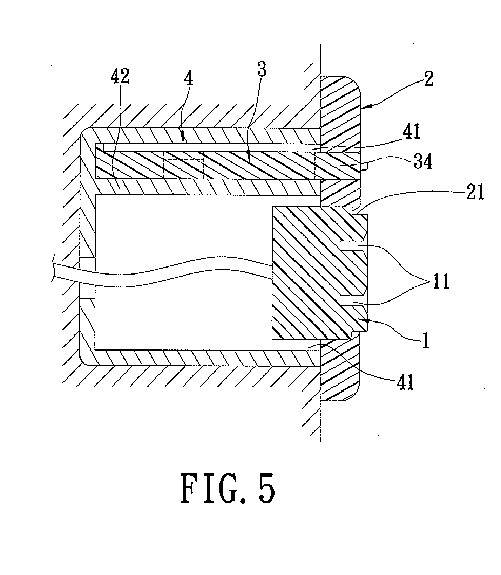

Please refer to Fig. 5, which shows a second embodiment of the present invention. The supporting device of the present invention is disposed around a socket 1. The surface of the socket 1 is provided with two sets of insertion holes 11. The supporting device comprises an accommodating box 4, a panel 2 and a supporting plate 3. The accommodating box 4 is a sealed body, and the front thereof is provided with an opening 41. The socket 1 is received in the accommodating box 4. The interior of the accommodating box 4 is provided with a fixed plate 42 above the socket 1.

The panel 2 is provided to seal the opening 41 of the accommodating box 4. The panel 2 is provided thereon with an engaging portion 21 that fits securely around the socket 1.

The supporting plate 3 is located in the opening 41 between the fixed plate 42 of the accommodating box 4 and the top of the panel 2 in such a manner that the supporting plate can slide forwards (in) and backwards (out) along the opening 41. The supporting plate 3 is provided thereon with at least one notch 34. The notch 34 extends to the edge of the supporting plate 3 to form an opening.

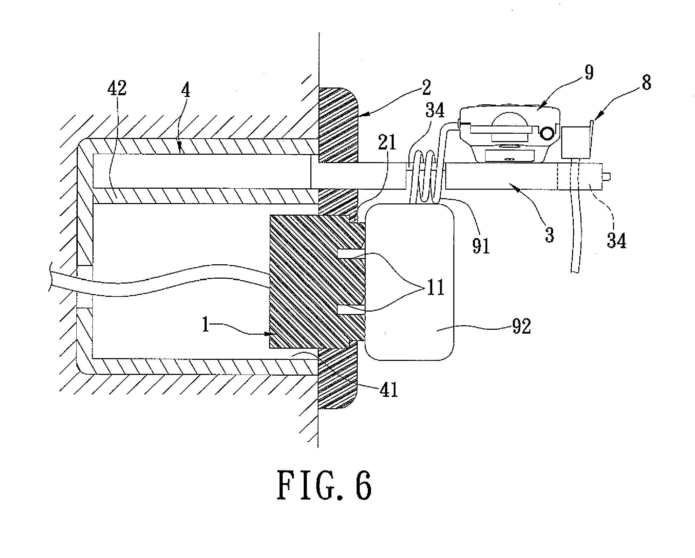

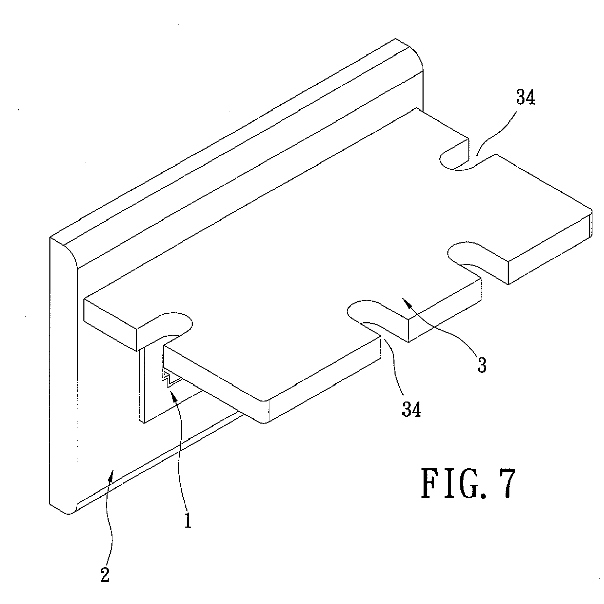

Please refer to Figs. 6 and 7. In the second embodiment, the user pulls the supporting plate 3 located on the fixed plate 2 along the opening 41 to move out of the accommodating box 4 (notice how once supporting plate 3 is pulled out, opening space 41, which represent the front gap, is filled up). Then, the user wraps the transmission line 91 of the electronic apparatus 9 around the notches 34 on both sides of the supporting plate 3 with the plug 92 provided at the end of the transmission line 91 being inserted in the insertion holes 11 of the socket 1. Then, the user places the electronic apparatus 9 on the supporting plate 3, so that the electronic apparatus 9 can be kept stable during the charging and Internet transmission operation of the electronic apparatus 9 via the socket 1. Furthermore, the free plug 8 can be hung on the notch 34, so that the plug 8 will not be placed randomly or get lost.

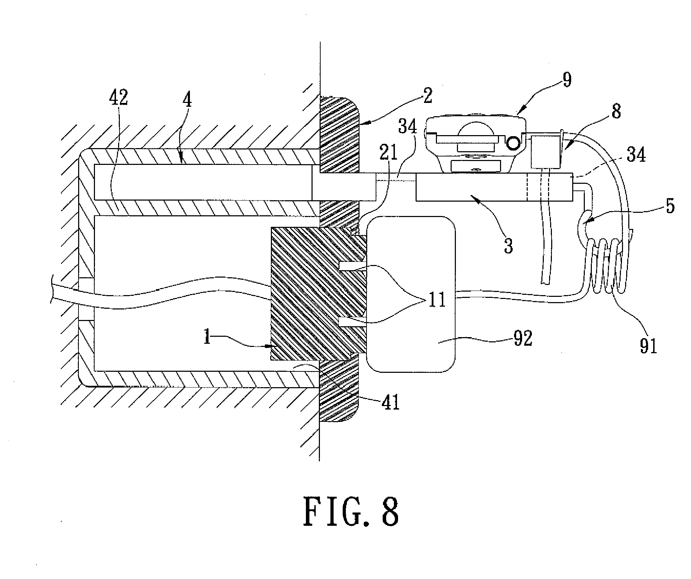

Please refer to Fig. 8, which shows a third embodiment of the present invention. In the present invention, both sides of the front end of the supporting plate 3 are provided with a hook 5 respectively.

With the above-mentioned arrangement, the user wraps the transmission line 91 of the electronic apparatus 9 around the two hooks 5 with the plug 92 provided at the end of the transmission line 91 being inserted into the insertion holes 11 of the socket 1. Then, the user places the electronic apparatus 9 on the supporting plate 3, so that the electronic apparatus 9 can be kept stable during the charging and Internet transmission operation of the electronic apparatus 9 via the socket 1.

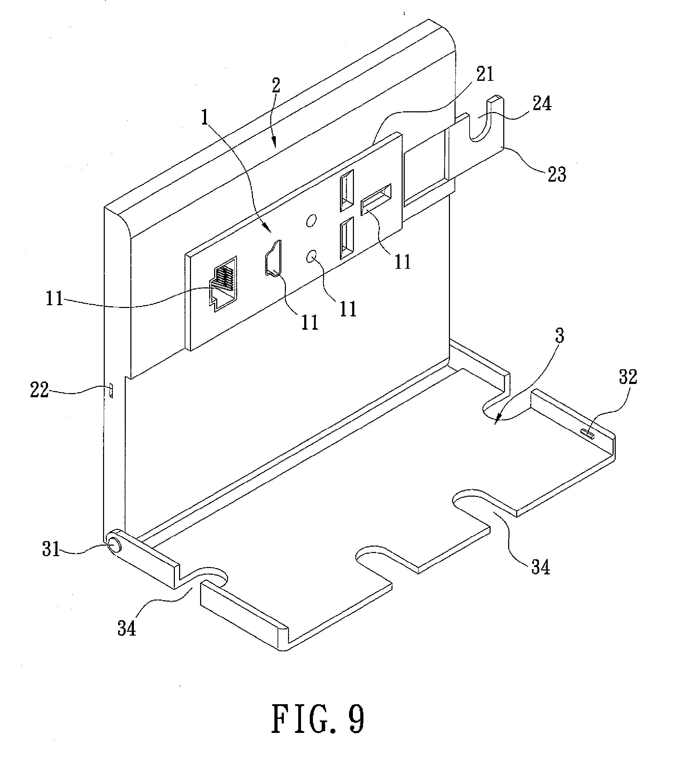

Please refer to Fig. 9, which shows a fourth embodiment of the present invention. One side of the panel 2 is provided with a seat 23 by a pivot connection. The seat 23 is provided with at least one notch 24. The free plug (not shown) can be hung on the notch 24, so that the plug will not be placed randomly or get lost. Furthermore, several sets of insertion holes 11 are provided. The insertion holes 11 can be used for various connectors or power supply.

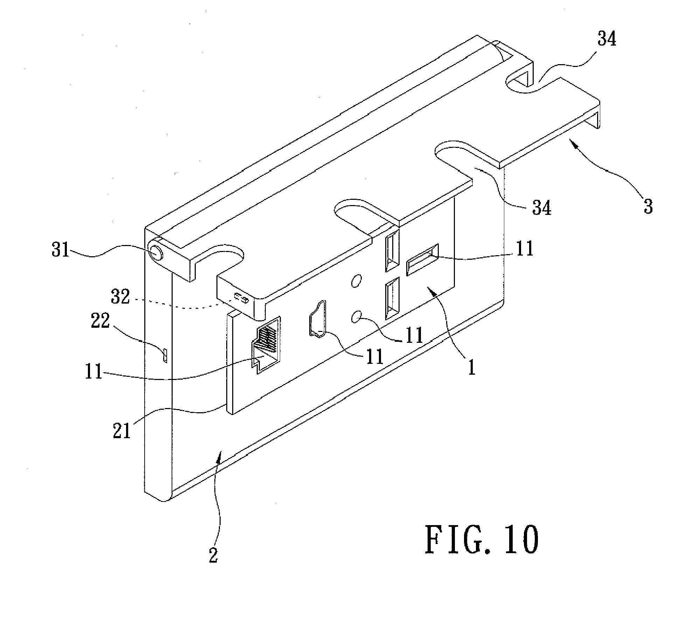

Please refer to Fig. 10, which shows a fifth embodiment of the present invention. The supporting plate 3 is provided with at least one notch 34. The free plug can be hung on the notch 34, so that the plug will not be placed randomly or get lost.

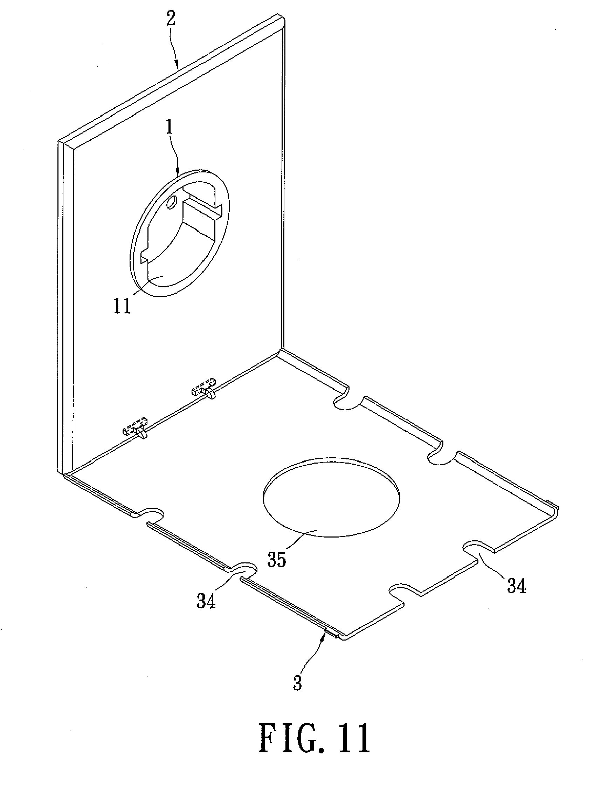

Please refer to Fig. 11, which shows a sixth embodiment of the present invention. The socket 1 is of a European standard. The supporting plate 3 is provided with a hole 35 corresponding to the insertion holes 11 of the socket 1. When the supporting plate 3 is connected with the panel 2, the insertion holes 11 of the socket 1 can be exposed via the hole 35, so that the insertion holes 11 of the socket 1 can be used easily.

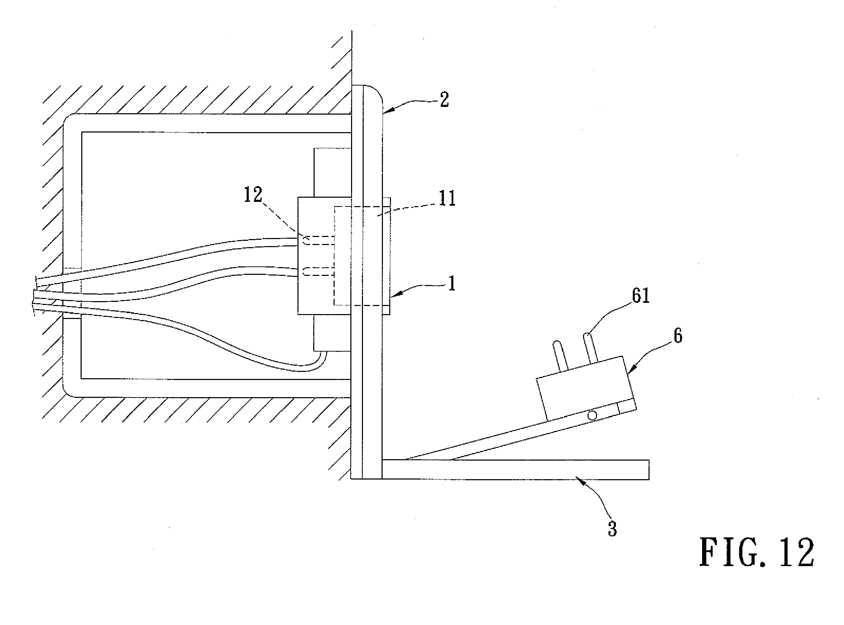

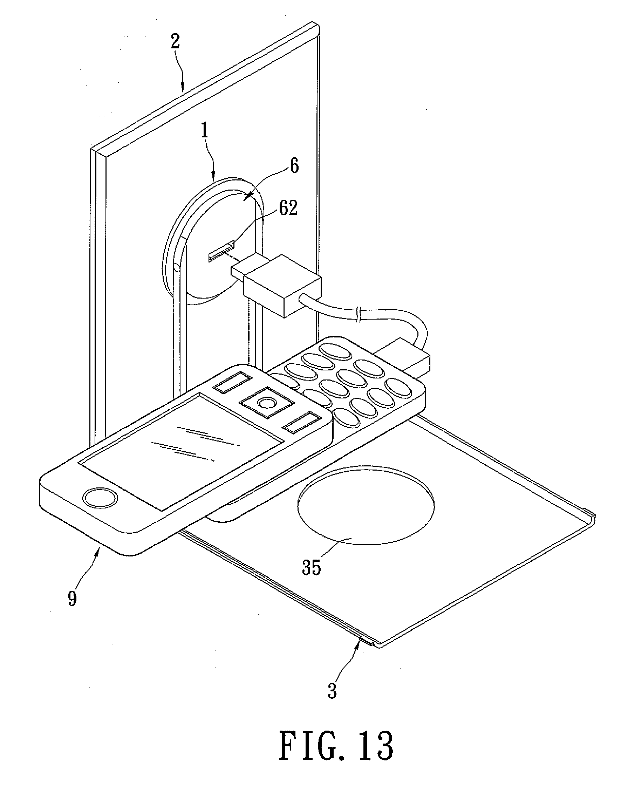

Please refer to Figs. 12 and 13, which show a seventh embodiment of the present invention. The socket 1 is of a European standard. One side of the panel 2 is pivotally connected with a charger 6. The rear end of the charger 6 is provided with terminals 61. The front end of the charger 6 is provided with a connector 62. In use, the charger 6 can rotate with respect to the panel 2 to be inserted into the insertion holes 11 of the socket 1 selectively. In this way, the terminals 61 of the charger 6 are brought into electrical contact with the terminals 12 within the insertion holes 11 of the socket 1. As a result, the electricity can be delivered to the charger 6, thereby charging the electronic apparatus 9. When not in use, the charger 6 can be separated from the insertion holes 11 of the socket 1, and thus it will not affect the normal function of the insertion holes 11 of the socket 1.

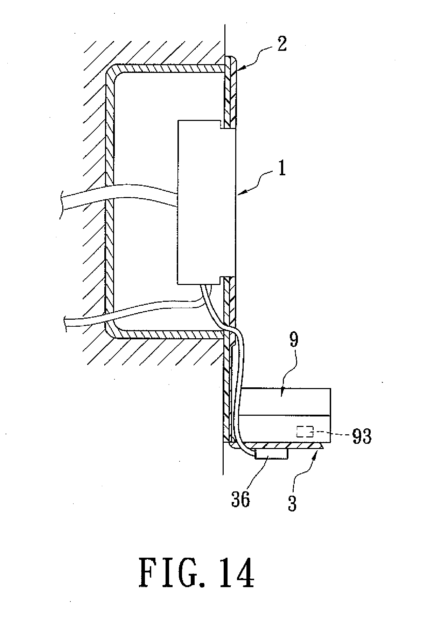

Please refer to Fig. 14, which shows an eighth embodiment of the present invention. The supporting plate 3 is provided with a wireless charging transmitter 36. The wireless charging transmitter 36 is electrically connected with the circuit of the socket. The electronic apparatus 9 is provided with a wireless charging receiver 93. Via the wireless transmission protocol between the wireless charging transmitter 36 and the wireless charging receiver 93, energy can be transmitted between the transmitter 36 and the receiver 93, thereby charging the electronic apparatus 9 on the supporting plate 3.

According to the above, the present invention has advantageous effects as follows.
(I) The present invention allows the electronic apparatus 9 to be placed on the supporting plate 3 around the socket 1, so that the electronic apparatus 9 can be kept stable during the charging and Internet transmission operation of the electronic apparatus 9 via the socket 1. Furthermore, the electronic apparatus 9 can be protected from being stepped on or hit accidently by anyone who passes nearby.
(II) The transmission line 91 of the electronic apparatus 9 is wrapped in the supporting plate 3 or on the hook 5. Furthermore, the electronic apparatus 9 is placed on the supporting plate 3 around the socket 1 with only a necessary short distance between the electronic apparatus 9 and the socket 1. Thus, the transmission line 91 and the plug 92 can be avoided from being pulled away, thereby maintaining a good electrical connection between the plug 92 and the socket 1.
(III) The supporting device of the present invention is provided with notches 24, 34 for hanging a free plug, so that the plug will not be placed randomly or get lost. Furthermore, the transmission line 91 of the electronic apparatus 9 can wrap around the notches 24, 34, so that the transmission line 91 can be fixed securely onto the supporting device. As a result, the transmission line 91 and the plug 92 can be protected from being pulled away accidentally.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A supporting device for a socket, the supporting device being disposed around a socket and comprising:
a panel having an engaging portion that fits securely around the socket; and
a supporting plate located in front of the panel, one side of the supporting plate coupled to the panel via at least one pivot connector, and the supporting plate being provided thereon with at least one notch.

2. The supporting device for a socket according to claim 1, wherein the panel is fixed to the supporting plate via at least one fastener.

3. A supporting device for a socket, the supporting device being disposed around a socket and comprising:
an accommodating box having an opening on its front side, the socket being accommodated in the accommodating box; and
a supporting plate located in an opening between the accommodating box and the socket, the supporting plate can slide forward and rearward along the opening, and the supporting plate being provided with at least one notch.

4. The supporting device for a socket according to claim 3, wherein the front end of the supporting plate extends to have at least one hook.

5. The supporting device for a socket according to claim 3, wherein the opening of the accommodating box is provided with a panel, and the panel has an engaging portion that fits securely around the socket.

6. The supporting device for a socket according to claim 3, wherein the accommodating box is provided with a fixed plate above the socket, the supporting plate is located on the fixed plate of the accommodating box and slides forwards and backwards along the opening.

7. A supporting device for a socket, the supporting device being disposed around a socket and comprising:
a panel having an engaging portion that fits securely around the socket, the panel being provided with a seat by a pivot connection, the seat being provided with at least one notch; and
a supporting plate located in front of the panel, one side of the supporting plate coupled to the panel via at least one pivot connector.

8. The supporting device for a socket according to claim 7, wherein the panel is fixed to the supporting plate via at least one fastener.

9. A supporting device for a socket, the supporting device being disposed around a socket and comprising:
a panel having an engaging portion that fits securely around the socket; and
a supporting plate located in front of the panel, one side of the supporting plate coupled to the panel via at least one pivot connector.

10. A supporting device for a socket, the supporting device being disposed around a socket and comprising:
an accommodating box having an opening on its front side, the socket being accommodated in the accommodating box; and
a supporting plate located in the opening between the accommodating box and the socket and can slide forward and backward along the opening.

11. A supporting device for a socket, the supporting device being disposed around a socket and comprising:
a panel having an engaging portion that fits securely around the socket; and
a supporting plate located in front of the panel, one side of the supporting plate being pivoted to the panel via at least one pivot connector, and the supporting plate being provided thereon with at least one notch; and
a charger pivotally connected to the panel, and the charger can be inserted into the socket selectively.

12. The supporting device for a socket according to claim 11, wherein the rear end of the charger is provided with terminals, the front end of the charger is provided with a connector, the charger is inserted into the socket selectively, thereby achieving an electrical connection between the terminals of the charger and the socket.

13. A supporting device for a socket, the supporting device being disposed around a socket and comprising:
a panel having an engaging portion that fits securely around the socket; and
a supporting plate located in front of the panel, one side of the supporting plate coupled to the panel via at least one pivot connector, wherein the supporting device is provided with a wireless charging transmitter, and a wireless charging receiver is provided on an electronic apparatus, thereby charging the electronic apparatus via a wireless charging process.
